# EUROPEAN PATENT APPLICATION

(11) **EP 1 455 352 A1**
(43) Date of publication of application: **08.09.2004**
(21) Application number: 03004798.9
(22) Date of filing: 05.03.2003
(51) Int. Cl.: G11B 7/24

(54) **New dyes for optical data recording**

(71) Applicant: CLARIANT INTERNATIONAL LTD., 4132 Muttenz (CH)
(72) Inventor: Mura, Jean-Luc, 68170 Rixheim (FR)

(57) **Abstract**

The present invention relates to optical layers comprising cationic optical brighteners as dyes and the use of said optical layers for optical recording media.

More particularly, the invention relates to cationic benzimidazol type dyes, preferably benzoxazolyl benzimidazol or benzofuranyl benzimidazol type dyes, with high-performance anions as counterions, such as tetracyanoquinodimethane (TCNQ-), tetraphenyborate or hexafluoroantimonate. The invention further relates to an optical layer comprising said dyes and to a write only read many (WORM) type optical recording medium capable of recording and reproducing information with radiation of blue laser, which employs a cationic benzimidazol type dye in the optical layer.

## Description

The present invention relates to the use of compounds known as optical brighteners as dyes in optical layers for optical data recording.

Recently, organic dyes have attracted considerable attentions in the field of diode-laser optical storage. Commercial recordable compact discs (CD-R) and recordable digital versatile discs (DVD-R) can contain, as recording layer, numerous dyes based on phthalocyanine, hemicyanine, cyanine and metallized azo structures. These dyes are suitable in their respective fields with the laser wavelength criteria. Other general requirements for dye media are strong absorption, high reflectance, high recording sensitivity, low thermal conductivity as well as light and thermal stabilities, durability for storage or non-toxicity.

For industrial application, these dyes have to be suitable for the spin coating process to prepare thin films, i.e. they have to be sufficiently soluble in the organic solvents generally applied in the spin coating process.

WORM type and erasable type optical recording media reproduce information by detecting variations in the reflectivity caused by physical deformation, by alterations of optical characteristics as well as by phase and magnetic properties of a recording layer before and after the recording.
Recordable compact disks (CD-R) are widely known as a WORM type optical recording medium. Recently, digital versatile disks (DVD) with increased information storage capabilities up to 4.7 GBytes have been commercialized.
The DVD-R technology adopts as a light source a red diode laser with a wavelength of 630-670 nm. Thereby the pit size and track interval can be reduced, increasing the information storage capacity by up to 6-8 times compared to CD-R's.

Blu-ray discs (Blu-ray disc is a standard developed by Hitachi Ltd., LG Electronics Inc., Matsushita Electric Industrial Co. Ltd., Pioneer Corporation, Royal Philips Electronics, Samsung Electronics Co. Ltd., Sharp Corporation, Sony Corporation, Thomson Multimedia) are going to be the next milestone in optical recording technology. Its new specification increases the data storage up to 27 GBytes per recording layer for a 12 cm diameter disk. By adopting a blue diode laser with a wavelength of 405 nm (GaN or SHG laser diodes), the pit size and track interval can be further reduced, again increasing the storage capacity by an order of magnitude.

The construction of optical data recording media is known in the art. An optical data recording media generally comprises a substrate and a recording layer, the optical layer. Usually disks or wavers of organic polymeric materials are used as substrates. Preferred substrates are polycarbonate (PC) or polymethylmethacrylate (PMMA). The substrate has to provide an even and uniform surface of high optical quality. The optical layer is deposited thereon in a thin and uniform film of high optical quality and defined thickness. Finally, a reflective layer, e.g. aluminium, gold, copper, is deposited upon the optical layer.

Advanced optical data recording media may comprise further layers, such as protective layers, adhesive layers or additional optical layers.

To provide for a thin and uniform film of the optical layer, the material is usually deposited by spin coating, vacuum evaporation, jet coating, rolling coating, or soaking. The preferred process in industry is spin coating to form an optical layer of about 70 nm to 250 nm thickness. For the application in the spin coating process, the material of the optical layer has to be highly soluble in organic solvents.

Cationic optical brighteners of the benzofuranyl benzimidazolium type and of the benzoxazolyl benzimidazolium type are known in the art.

The British Patent GB 1331670 discloses quaternised benzofuranyl-benzimidazoles and their use for the optical brightening of organic materials.

The US Patent No. 4,429,133 discloses 2'-benzoxazolyl-2-benzimidazoles and their use as optical brightening agents for polyacrylonitrile.

The US Patent No. 4,313,846 discloses N-acyl-o-phenylenediamines, their conversion into benzimidazolium compounds and their use for whitening man-made organic material.

Since several years, compounds according to the following formulae are known as highly efficient optical brighteners and are commercially available: 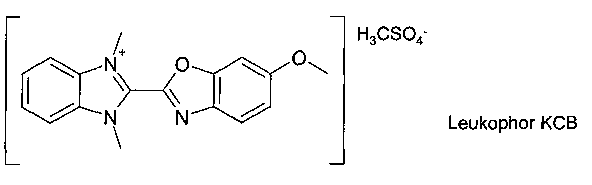 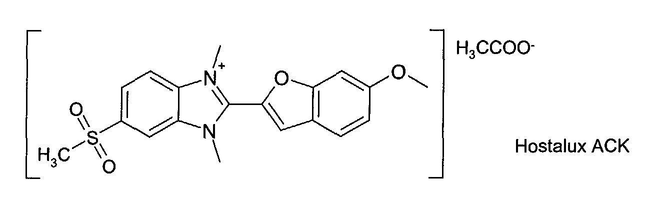 Leukophor® and Hostalux® are Trademarks of Clariant.

Surprisingly it has been found, that said cationic optical brighteners are useful as dye compounds in optical layers for optical recording media.

The present invention therefore in general terms relates to optical layers comprising cationic optical brighteners as dyes and the use of said optical layers for optical recording media.

More particularly, the invention relates to cationic benzimidazol type dyes, to an optical layer comprising said dyes and to a write only read many (WORM) type optical recording medium capable of recording and reproducing information with radiation of blue laser of preferably 405 nm, which employs a cationic benzimidazol type dye in the optical layer.

Surprisingly it has also been found, that the performance of dyes for optical layers derived from compounds known as cationic optical brighteners with conventional anions as counterions, such as halide (fluoride, chloride, bromide, iodide), C₁₋₂₀ carboxylate, formiate, acetate, oxalate, lactate, glycolate, citrate or methylsulfate can be significantly improved by exchanging the conventional anions for high-performance anions, such as tetracyanoquinodimethane (TCNQ⁻), BX₄⁻, SbX₆⁻, PX₆⁻ in which X represents halogen (-F, -Cl, -Br, -I) or phenyl.

Therefore in a preferred embodiment, the invention relates to cationic benzofuranyl benzimidazol type dyes or benzoxazolyl benzimidazol type dyes with high-performance anions as counterions, such as tetracyanoquinodimethane (TCNQ-), tetraphenyborate or hexafluoroantimonate.

The present invention is described to be an optical layer comprising at least one dye compound of the formula (I) 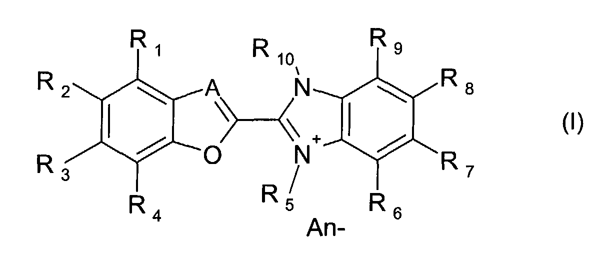 wherein
- A: is either N or a group CH,
- R₁, R₂, R₃, R₄: independently of one another, represent hydrogen, halogen (-F, -Cl, - Br, -I), cyano (-CN), nitro (-NO₂), C₁₋₈ alkyl, C₆₋₁₂ aryl, -NR₁₁R₁₂, hydroxy, C₁₋₈ alkoxy, C₁₋₈ alkylthio, C₆₋₁₂ aryloxy, C₆₋₁₂ arylthio, - SO₃H, -SO₂R₁₁, -SO₂NR₁₁R₁₂, -CO₂R₁₁, -CONR₁₁R₁₂, -NHCOR₁₁,
in which R₁₁ and R₁₂ are independently hydrogen or C₁₋₈ alkyl;
- R₅: is C₁₋₈ alkyl, wherein the alkyl can be unsubstituted or substituted by hydroxy, -NR₁₁R₁₂ or C₆₋₁₂ aryl;
- R₆, R₇, R₈, R₉: independently of one another, represent hydrogen, hydroxy (-OH), C₁₋₈ alkyl, C₆₋₁₂ aryl, C₁₋₈ alkoxy, C₆₋₁₂ aryloxy, -NR₁₁R₁₂, -SO₂R₁₁, - SO₂NR₁₁R₁₂, -CO₂R₁₁, -CONR₁₁R₁₂, -NHCOR₁₁,
in which R₁₁ and R₁₂ are independently hydrogen or C₁₋₈ alkyl;
- R₁₀ is: C₁₋₈ alkyl, wherein the alkyl can be unsubstituted or substituted by hydroxy, -NR₁₁R₁₂ or C₆₋₁₂ aryl,
in which R₁₁ and R₁₂ are independently hydrogen or C₁₋₈ alkyl;
- An⁻: represents an anion selected from halide, C₁₋₂₀ carboxylate, formiate, acetate, oxalate, lactate, glycolate, citrate, H₃C-SO₄⁻, ClO₄⁻, tetracyanoquinodimethane (TCNQ⁻), H₃C-SO₃⁻, ClO₄⁻, BX₄⁻, SbX₆⁻, PX₆⁻
in which X represents halogen (-F, -Cl, -Br, -I) or phenyl.

In a preferred aspect, the present invention relates to an optical layer comprising at least one dye compound of the formula (I) as described above, wherein
- A: is either N or a group CH,
- R₁, R₂, R₃, R₄: independently of one another, represent hydrogen, halogen (-F, -Cl, - Br, -I), cyano (-CN), nitro (-NO₂), hydroxy (-OH), C₁₋₈ alkoxy, C₆₋₁₂ aryloxy,
- R₅: is C₁₋₈ alkyl or benzyl;
- R₆, R₇, R₈, R₉: independently of one another, represent hydrogen, hydroxy, C₁₋₈ alkoxy, -SO₂R₁₁, -SO₂NR₁₁R₁₂, -CO₂R₁₁, -CONR₁₁R₁₂,
in which R₁₁ and R₁₂ are independently hydrogen or C₁₋₈ alkyl,
- R₁₀: is C₁₋₈ alkyl;
- An⁻: represents an anion selected from tetracyanoquinodimethane (TCNQ⁻), BX₄⁻, SbX₆⁻, PX₆⁻,
in which X represents halogen (-F, -Cl, -Br, -I) or phenyl.

In a more preferred aspect, the present invention relates to an optical layer comprising at least one dye compound of the formula (I) as described above, wherein
- A: is either N or a group CH,
- R₁, R₂, R₃, R₄: independently of one another, represent hydrogen, hydroxy, C₁₋₈ alkoxy, C₆₋₁₂ aryloxy,
- R₅: is C₁₋₄ alkyl or benzyl;
- R₆, R₇, R₈, R₉: independently of one another, represent hydrogen, -SO₂R₁₁ or -SO₂NR₁₁R₁₂;
in which R₁₁ and R₁₂ are independently hydrogen or C₁₋₈ alkyl,
- R₁₀: is C₁₋₄ alkyl;
- An⁻: represents an anion selected from tetracyanoquinodimethane (TCNQ⁻), BX₄⁻, SbX₆⁻, PX₆⁻,
in which X represents fluoro or phenyl.

In one most preferred embodiment, the present invention relates to an optical layer comprising at least one dye compound of the formula (I) as described above, wherein
- A: is N,
- R₁, R₂, R₃, R₄: three thereof represent hydrogen and one thereof represents C₁₋₄ alkoxy;
- R₅: is methyl or ethyl;
- R₆, R₇, R₈, R₉: all four represent hydrogen;
- R₁₀: is C₁₋₄ alkyl;
- An⁻: represents an anion selected from tetracyanoquinodimethane (TCNQ⁻), BX₄⁻, SbX₆⁻, PX₆⁻
in which X represents fluoro or phenyl.

In another most preferred embodiment, the present invention relates to an optical layer comprising at least one dye compound of the formula (I) as described above, wherein
- A: is CH,
- R₁, R₂, R₃, R₄: three thereof represent hydrogen and one thereof represents C₁₋₄ alkoxy;
- R₅: is methyl or ethyl;
- R₆, R₇, R₈, R₉: three thereof represent hydrogen and one thereof represents -SO₂R₁₁;
in which R₁₁ is C₁₋₄ alkyl,
- R₁₀: is C₁₋₄ alkyl;
- An⁻: represents an anion selected from tetracyanoquinodimethane (TCNQ⁻), BX₄⁻, SbX₆⁻, PX₆⁻
in which X represents fluoro or phenyl.

An optical layer according to the invention may also comprise a mixture of two or more, preferably of two dye compounds according to formula (I) as defined above.

Mixtures of two or more dye compounds according to formula (I) comprise mixtures of two or more benzoxazolyl type dyes (A = N), mixtures of two or more benzofuranyl type dyes (A = CH) or mixtures of one or more benzoxazolyl type dye with one or more benzofuranyl type dye.

Preferred mixtures are mixtures of one benzoxazolyl type dye with one benzofuranyl type dye.

Most preferred mixtures are mixtures of dye compounds derived from Leukophor® KCB with high-performance anions as described above, mixtures of dye compounds derived from Hostalux® ACK with high-performance anions as described above and in particular mixtures of a dye compound derived from Leukophor® KCB with high-performance anions as described above with a dye compound derived from Hostalux® ACK with high-performance anions as described above

Further, the invention relates to a method for producing optical layers comprising the following steps
(a) providing a substrate
(b) dissolving a dye compound or a mixture of dye compounds of formula (I) in an organic solvent to form a solution,
(c) coating the solution (b) on the substrate (a);
(d) evaporating the solvent to form a dye layer.

Preferred substrates are polycarbonate (PC) or polymethylmethacrylate (PMMA).

Organic solvents are selected from C₁₋₈ alcohol , halogen substituted C₁₋₈ alcohols, C₁₋₈ ketone, C₁₋₈ ether, halogen substituted C₁₋₄ alkane, or amides.

Preferred C₁₋₈ alcohols or halogen substituted C₁₋₈ alcohols are for example methanol, ethanol, isopropanol, diacetone alcohol (DAA), 2,2,3,3-tetrafluoropropanol, trichloroethanol, 2-chloroethanol, octafluoropentanol or hexafluorobutanol.
Preferred C₁₋₈ ketones are for example acetone, methylisobutylketone, methylethylketone, or 3-hydroxy-3-methyl-2-butanone.

Preferred halogen substituted C₁₋₄alkanes are for example chloroform, dichloromethane or 1-chlorobutane.

Preferred amides are for example dimethylformamide or dimethylacetamide.

The optical layer (dye layer) obtained preferably has a thickness from 70 to 250 nm.

In a further aspect, the present invention provides for optical layers suitable for high-density recording material, e.g. of the WORM disk format, in a laser wavelength range of from 350-450nm, preferably around 405 nm.

The dye compounds of formula (I) possess the required optical characteristics (such as high absortivity, high recording sensitivity as example), an excellent solubility in organic solvents, an excellent light stability and a decomposition temperature of 250-300°C.

The dye compounds of formula (I) are easy to synthesize with high yields and can be manufactured at a reduced cost. The general synthesis pathway is known in the art.

The European Patent EP 0 010 063 discloses a general process for the condensation reaction to obtain benzofuranyl benzimidazol type compounds.

The US Patent No. 4,313,846 discloses a general synthesis of benzoxazolyl benzimidazol type compounds.

### Preparation of high density optical disk recording medium

The preparation of a high density optical disk recording medium conventionally comprises the following steps:
(a) providing a first substrate
(b) dissolving the dye set forth in claim 1 in an organic solvent to form a solution, and coating the first solution on the first substrate;
(c) drying the solution to form a dye layer and
(d) disposing a reflection layer on the dye layer and
(e) disposing a second substrate on the reflection layer

In step (e), preferably a second substrate is bonded with the first substrate to form the high-density optical disc recording medium. Conventional techniques for bonding are printing, glueing or melting.

### Examples

All dyes are prepared using standard procedures known in the art. If required, the dyes can be purified by recrystallization from an alcohol.

The complex dyes are prepared by reaction of a solution of counter-ion salt (e.g. sodium hexafluoroantimonate, LiTCNQ, sodium tetraphenylborate) with a boiling or hot solution of the corresponding starting material (e.g. product A = Hostalux® ACK) in a selected alcohol. The precipitate is isolated following standard methods.
The synthesis of LiTCNQ is done according to L. R. Melby et al., J. Am. Chem. Soc., 84, p.3374, (1962).

### Example 1

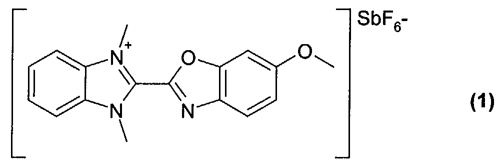

### Example 2

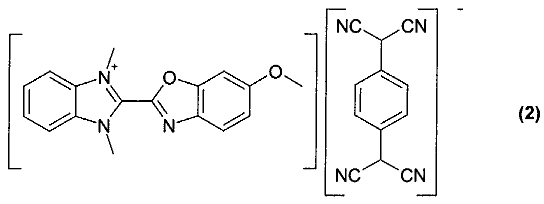

### Example 3

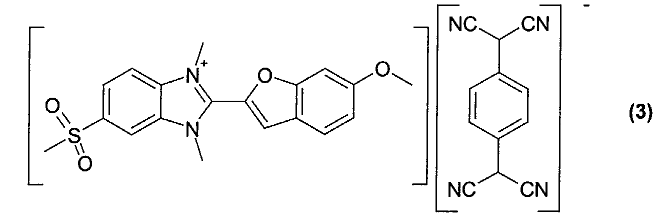

### Example 4

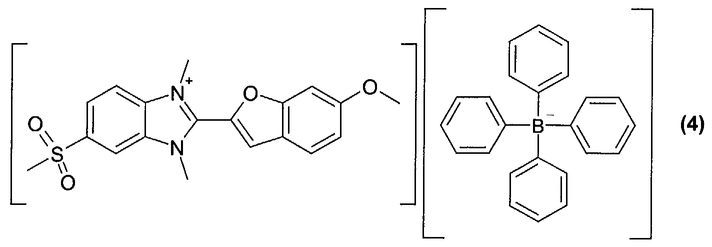

### Example 5

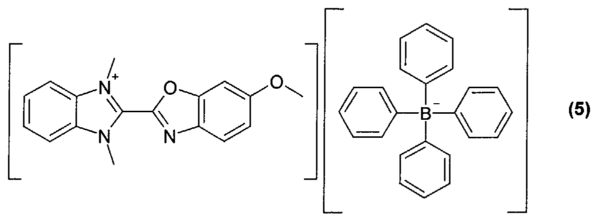

| **Optical characteristics (in solution)** | | | |
|---|---|---|---|
| **Example** | **Anion** | **λ**_{**max**} | **ε (λ**_{**max**}**)** |
| **(1)** | SbF₆⁻ | 360 nm | 31 000 |
| **(2)** | TCNQ⁻ | 392 nm | 51 500 |
| **(3)** | TCNQ⁻ | 376 nm | 44 000 |
| **(4)** | B(Ph)₄⁻ | 360 nm | 29 000 |
| **(5)** | B(Ph)₄⁻ | 378 nm | 36 800 |
| **product A** | AcO⁻ | 363 nm | 27 000 |

### Example 6

0.20 g of the dye of formula (1) obtained from example 1 were dissolved in 10 ml of tetrafluoropropanol, and stirred at room temperature for 5 hours. The solution was filtered with a Teflon filter (having 0,2 µm pore size) and spin coated over a substrate to form a dye layer. The substrate was a polycarbonate substrate with 0.6 mm thickness having pregrooves with 150 nm depth, 300 nm width and 800 nm track pitch.

The substrate having the dye layer was dried in a vacuum oven set at 40°C for 12 hours. The optical layers obtained had a uniform and even surface at a thickness of 120 nm. As a reflective layer, silver was deposited over the dye layer with a thickness of 100 nm. Finally, the substrate formed with the reflective layer and the recording layer is combined with another blank substrate with a thickness of 0.6mm. A high-density recordable optical disc of 1.20mm thickness can be thus formed.

The optical recording medium having the thus formed recording layer therein was subjected to the following evaluation tests.
The recording conditions were the following ones: constant linear velocity (CLV) at 5 m/s, wavelength at 405 nm, numerical aperture (NA) at 0.65 and writing power from 8-10 mW. With an evaluation device equipped with a blue semiconductor laser head, pits were formed and signals recorded.

By the use of the same device, these pits could be read.
The reading conditions were: CLV at 5.0 m/s, wavelength at 405 nm, NA at 0.65, and reading power from 0.5 to 1.5 mW.

The tests provided for results within the expectations with regard to absorptivity, reflectance and recording sensitivity. Further, the obtained optical layers were sufficiently stable to light and heat. The optical recording media were storage stable within specification.

### Example 7-10

Optical recording media with an optical layer comprising the dyes obtained according to examples 2 to 5 (compounds of formula (2)-(5)) were manufactured and tested according to the procedure given for example 6.

## Claims

1. An optical layer comprising at least one dye compound of the formula (I) 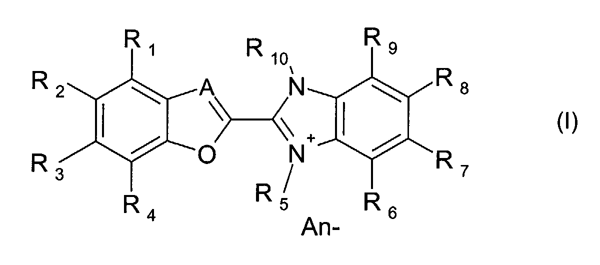 wherein
A is either N or a group CH,
R₁, R₂, R₃, R₄ independently of one another, represent hydrogen, halogen (-F, -Cl, -Br, -I), cyano (-CN), nitro (-NO₂), C₁₋₈ alkyl, C₆₋₁₂ aryl, -NR₁₁R₁₂, hydroxy, C₁₋₈ alkoxy, C₁₋₈ alkylthio, C₆₋₁₂ aryloxy, C₆₋₁₂ arylthio, -SO₃H, -SO₂R₁₁, -SO₂NR₁₁R₁₂, - CO₂R₁₁, -CONR₁₁R₁₂, -NHCOR₁₁,
in which R₁₁ and R₁₂ are independently hydrogen or C₁₋₈ alkyl,
R₅ is C₁₋₈ alkyl, wherein the alkyl can be unsubstituted or substituted by hydroxy, -NR₁₁R₁₂ or C₆₋₁₂ aryl;
R₆, R₇, R₈, R₉ independently of one another, represent hydrogen, hydroxy (-OH), C₁₋₈ alkyl, C₆₋₁₂ aryl, C₁₋₈ alkoxy, C₆₋₁₂ aryloxy, -NR₁₁R₁₂, -SO₂R₁₁, -SO₂NR₁₁R₁₂, -CO₂R₁₁,-CONR₁₁R₁₂, -NHCOR₁₁,
in which R₁₁ and R₁₂ are independently hydrogen or C₁₋₈ alkyl
R₁₀ is C₁₋₈ alkyl, wherein the alkyl can be unsubstituted or substituted by hydroxy, -NR₁₁R₁₂ or C₆₋₁₂ aryl;
in which R₁₁ and R₁₂ are independently hydrogen or C₁₋₈ alkyl
An⁻ represents an anion selected from halide, C₁₋₂₀ carboxylate, formiate, acetate, oxalate, lactate, glycolate, citrate, H₃C-SO₄⁻, ClO₄⁻, tetracyanoquinodimethane (TCNQ⁻), BX₄⁻, SbX₆⁻, PX₆⁻
in which X represents halogen (-F, -Cl, -Br, -I) or phenyl.

2. An optical layer according to claim l,wherein
A is either N or a group CH,
R₁, R₂, R₃, R₄ independently of one another, represent hydrogen, halogen (-F, -Cl, -Br, -I), cyano (-CN), nitro (-NO₂), hydroxy (-OH), C₁₋₈ alkoxy, C₆₋₁₂ aryloxy,
R₅ is C₁₋₈ alkyl or benzyl;
R₆, R₇, R₈, R₉ independently of one another, represent hydrogen, hydroxy, C₁₋₈ alkoxy, -SO₂R₁₁, -SO₂NR₁₁R₁₂, -CO₂R₁₁, -CONR₁₁R₁₂,
in which R₁₁ and R₁₂ are independently hydrogen or C₁₋₈ alkyl,
R₁₀ is C₁₋₈ alkyl;
An⁻ represents an anion selected from tetracyanoquinodimethane (TCNQ⁻), BX₄⁻, SbX₆⁻, PX₆⁻
in which X represents halogen (-F, -Cl, -Br, -I) or phenyl.

3. An optical layer according to claim 2,wherein
A is either N or a group CH,
R₁, R₂, R₃, R₄ independently of one another, represent hydrogen, hydroxy, C₁₋₈ alkoxy, C₆₋₁₂ aryloxy,
R₅ is C₁₋₄ alkyl or benzyl;
R₆, R₇, R₈, R₉ independently of one another, represent hydrogen, -SO₂R₁₁ or -SO₂NR₁₁R₁₂,;
in which R₁₁ and R₁₂ are independently hydrogen or C₁₋₈ alkyl,
R₁₀ is C₁₋₄ alkyl;
An⁻ represents an anion selected from tetracyanoquinodimethane (TCNQ⁻), BX₄⁻, SbX₆⁻, PX₆⁻
in which X represents fluoro or phenyl.

4. An optical layer according to claim 3,wherein
A is N,
R₁, R₂, R₃, R₄ three thereof represent hydrogen and one thereof represents C₁₋₄ alkoxy;
R₅ is methyl or ethyl;
R₆, R₇, R₈, R₉ all four represent hydrogen;
R₁₀ is C₁₋₄ alkyl;
An⁻ represents an anion selected from tetracyanoquinodimethane (TCNQ⁻), BX₄⁻, SbX₆⁻, PX₆⁻
in which X represents fluoro or phenyl.

5. An optical layer according to claim 3,wherein
A is CH,
R₁, R₂, R₃, R₄ three thereof represent hydrogen and one thereof represents C₁₋₄ alkoxy;
R₅ is methyl or ethyl;
R₆, R₇, R₈, R₉ three thereof represent hydrogen and one thereof represents -SO₂R₁₁;
in which R₁₁ is C₁₋₄ alkyl,
R₁₀ is C₁₋₄ alkyl;
An⁻ represents an anion selected from tetracyanoquinodimethane (TCNQ⁻), BX₄⁻, SbX₆⁻, PX₆⁻
in which X represents fluoro or phenyl.

6. An optical layer according to claim 1 comprising a mixture of dye compounds according to formula (I) as defined in claims 1 to 5.

7. A method for producing optical layers according to claims 1 to 6, comprising the following steps
(e) providing a substrate
(f) dissolving a dye compound or a mixture of dye compounds of formula (I) as defined in claims 1 to 6 in an organic solvent to form a solution,
(g) coating the solution (b) on the substrate (a);
(h) evaporating the solvent to form a dye layer.

8. A method according to claim 7, wherein the substrate is polycarbonate (PC) or polymethylmethacrylate (PMMA).

9. A method according to claim 5, wherein the organic solvent is selected from C₁₋₈ alcohol , halogen substituted C₁₋₈ alcohols, C₁₋₈ ketone, C₁₋₈ ether, halogen substituted C₁₋₄ alkane, or amides.

10. A method according to claim 6, wherein the C₁₋₈ alcohols or halogen substituted C₁₋₈ alcohols are selected from methanol, ethanol, isopropanol, diacetone alcohol (DAA), 2,2,3,3-tetrafluoropropanol, trichloroethanol, 2-chloroethanol, octafluoropentanol or hexafluorobutanol;
the C₁₋₈ ketones are selected from acetone, methylisobutylketone, methylethylketone, or 3-hydroxy-3-methyl-2-butanone;
the halogen substituted C₁₋₄ alkanes are selected from chloroform, dichloromethane or 1-chlorobutane; and
the amides are selected from dimethylformamide or dimethylacetamide.

11. A method according to claim 7, wherein the optical layer (dye layer) has a thickness from 70 to 250 nm.

12. An optical recording medium comprising an optical layer according to claims 1 to 6, wherein at least one dye compound of the formula (I) as defined in claims 1 to 6 is used.
